(19) **Europäisches Patentamt**
**European Patent Office**
**Office européen des brevets**

(11) Publication number: **0 523 097 B1**

(12) **EUROPEAN PATENT SPECIFICATION**

(45) Date of publication of patent specification: **04.10.95**  (51) Int. Cl.6: **B01J  29/90**, B01J 38/44

(21) Application number: **91906807.2**

(22) Date of filing: **11.03.91**

(86) International application number:
**PCT/US91/01625**

(87) International publication number:
**WO 91/13682 (19.09.91 91/22)**

(54) **APPARATUS AND METHOD FOR REGENERATING DEACTIVATED ZEOLITE REFORMING CATALYSTS.**

(30) Priority: **09.03.90 US 491019**

(43) Date of publication of application:
**20.01.93 Bulletin  93/03**

(45) Publication of the grant of the patent:
**04.10.95 Bulletin  95/40**

(84) Designated Contracting States:
**BE DE FR GB IT LU NL**

(56) References cited:
**EP-A- 0 142 352        EP-A- 0 378 482**
**DE-A- 4 001 779        DE-B- 1 038 216**
**DE-B- 1 141 401        GB-A- 2 000 043**
**US-A- 2 908 653**

(73) Proprietor: **EXXON RESEARCH AND ENGI-NEERING COMPANY**
**P.O.Box 390,**
**180 Park Avenue**
**Florham Park,**
**New Jersey 07932-0390 (US)**

(72) Inventor: **NADLER, Murray**
**3823 Oberlin**
**Houston, TX 77005 (US)**
Inventor: **WALSH, John, Frances**
**828 High Lake Drive**
**Baton Rouge, LA 70810 (US)**

(74) Representative: **Northover, Robert Frank et al**
**Exxon Chemical Limited**
**Exxon Chemical Technology Centre**
**PO Box 1**
**Abingdon**
**Oxfordshire, OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

BACKGROUND OF THE INVENTION

1. Field of Invention

This present invention relates to regenerating deactivated catalysts. More particularly, the present invention is directed to apparatus and methods for regenerating deactivated reforming catalysts, containing one or more Group VIII metals. More specifically, the present invention is directed to apparatus and methods for regenerating reforming catalysts supported on zeolites and, in particular, to monofunctional, non-acidic reforming catalysts supported on large pore zeolites, and preferably zeolite L containing platinum.

2. Discussion of Background and Material Information

Catalytic reforming is a major petroleum refining process used to raise the octane rating of naphthas (C6 to C11 hydrocarbons) for gasoline blending. Catalytic reforming is also a principle source of aromatic chemicals, i.e., benzene, toluene and xylenes, via conversion of paraffins and naphthenes to aromatics.

The principle reforming chemical reactions are dehydrogenation of cyclohexane to aromatics, dehydrocyclization of paraffins to aromatics, dehydroisomerization of alkylcyclopentanes to aromatics, isomerization of normal paraffins to branched paraffins, dealkylation of alkylbenzenes, and hydrocracking or paraffins to light hydrocarbons. The hydrocracking of paraffins to light hydrocarbons is undesirable and should be minimized because light hydrocarbons have low value.

Reforming is typically carried out at temperatures of 426°C to 538°C (800°F to 1000°F), pressures of 3.4 to 207 bar (50 psi to 3000 psi), hourly weight space velocities of 0.5 to 3.0, and in the presence of hydrogen at molar ratios to feed of 1 to 10.

Conventional production line-scale reforming plants include a plurality, e.g. three or four, adiabatic packed bed reactors containing different amounts of catalyst connected in series, commonly referred to as a reactor train. In conventional reforming processes, the naphtha feed is vaporized, mixed with hydrogen, and preheated in a furnace to a temperature within the range of about 426°C to 538°C (800°F to 1000°F) and fed into the inlet of the lead reactor. Inasmuch as reforming is a net endothermic process, the temperatures of reactor effluents are typically below or in the lower end of a reforming temperature range of 426°C to 538°C (800°F to 1000°F), thus requiring that the reactor effluent streams be reheated in furnaces installed upstream of each of the reactors.

The product stream from the last downstream reactor is cooled and flashed to low pressure in a drum and separated into a liquid reformate stream which is rich in aromatics and a gas stream which is rich in hydrogen. Part of the hydrogen-rich stream is recycled into the feed stream to provide the hydrogen to feed ratio required for the process. Hydrogen is a by-product of reforming and the net hydrogen produced is removed as a gas stream from the flash drum and purified.

Catalysts currently used in commercial reformers include a Group VIII metal, such as platinum, or platinum plus a second catalytic metal, such as rhenium or iridium, dispersed on an alumina substrate. Typically, chlorine is incorporated on the alumina to add acid functionality. Alumina-based reforming catalysts are suitable for aromatizing $C_{8+}$ paraffins, but are less effective for aromatizing $C_6$ to $C_8$ paraffins because these catalysts hydrocrack more of the lighter paraffins to low value fuel gas than they convert to aromatics.

Conventional commercial catalysts are bifunctional, i.e., the catalysts enhance i) dehydrogenation and cyclization reactions on the catalytic metal sites; and ii) isomerization on separate strong acid sites in the catalyst. The undesirable hydrocracking reactions also occur on the acid sites.

Within the past few years reforming catalysts have been developed which have been discovered to be particularly effective for aromatizing the $C_6$ to $C_8$ paraffin components of naphtha. These catalysts are made using zeolite, rather than alumina, as the support for the catalytic metal. They are mono-functional and contain relatively few strong acid sites. Unlike conventional bifunctional catalysts, zeolite based catalysts accomplish dehydrogenation and cyclization reactions as well as isomerization on the dispersed metallic catalytic sites. Because these zeolite-based catalysts have few strong acid sites, undesirable hydrocracking reactions are repressed.

Zeolites which are preferred for reforming catalysts are large pore zeolites i.e. zeolites with a 6 to 15 Angstrom pore diameter. Suitable large pore zeolites for purposes of the present invention include zeolite X, Y, and L, with zeolite L being the most preferred support for reforming catalysts, particularly wherein the catalytically active metal is platinum.

For production line-scale reforming processes, zeolite is preferably formed into aggregates, such as extrudates or tablets, typically 0.8mm to 6mm (1/32 to 1/4 inches) in size; otherwise if the reactor bed is packed with zeolite powder, the pressure drop across zeolite powder, packed reactor beds would be unacceptably high and powder losses via elutriation in reactor off-gas would he excessive. For forming the zeolite into aggregates, oxides, such as alumina or silica, may be used as binder materials.

During reforming, catalysts deactivate due to accumulation of coke deposits in the catalyst, and agglomeration of the fine catalytic metal particles dispersed in the catalyst into larger particles. Therefore, it is common practice to periodically regenerate reforming catalysts to recover their activity. Unexpectedly, however, it was found that it is more difficult to regenerate the previously described zeolite-based reforming catalysts than the conventional alumina-based catalysts.

In general, such regeneration procedures include: 1) burning off the coke deposits using oxygen, and optionally a halogen or halogen containing compound, 2) redispersing the active catalytic metals by oxyhalogenation using , for example, HCl, oxygen and water, 3) stripping excess halogen off the catalyst using first wet air, and then dry air as a stripping gas, and 4) reducing the dispersed catalytic metal using a reducing agent such as hydrogen.

In attempts to overcome problems experienced during regeneration of large-pore, zeolite-based reforming catalysts, various procedures have been developed, for example as disclosed in U.S. Patent Nos. 4,552,856, 4,595,668, 4,595,669, 4,595,670, 4,634,517 and 4,648,960.

U.S. Patent 4,568,658, POEPPEIMEIER et al.; U.S. Patent 4,595,695, FUNG et al.; and U.S. Patent 4,595,670, TAUSTER et al., attempt to improve the reforming characteristics of zeolite-based catalysts by improving the dispersion of catalytic metals in fresh catalysts, i.e., catalysts which have not been "put on oil", and which do not contain coke products, to increase the initial activity and selectivity of the fresh catalysts relative to its performance on oil with no preemptioned dispersion.

U.S. Patent Ho. 3,986,982, CROWSON et al.; U.S. Patent No. 4,493,901, BERNARD et al.; U.S. Patent No. 4.645,751, McMullen et al.; U.S. Patent No. 4,851,380, Van LEIRSBURG et al.; U.S. Patent No. 4,855,269, MOHR and U.S Patent No. 4,810,683, COHN et al. are directed to regeneration of zeolite-based catalysts.

U.S. Patent No. 3,986,982, CROWSON et al., discloses that oxidative burn-off to remove carbonaceous deposits should be performed in a manner which controls water produced from the hydrogen present in the deposits, or added, by drying the inert gas when the inert gas is recycled so as to effect a water content of the gas at the inlet which is below 200 ppm volume.

U.S. Patent No. 4,493,901, BERNARD et al., discloses that the selectivity of regenerated zeolite-based aromatization catalysts may be improved by adding a quantity of water up to about 10% by weight with respect to the catalyst to the air used to cool the catalyst after the oxychlorination step.

U.S. Patent No. 4,645,751, MCCULLEN et al., is directed to regeneration of deactivated noble metal containing zeolite catalysts which involves initially reducing the deactivated catalyst in hydrogen, pretreating the thus reduced catalyst with an inert gas stream containing about 0.001 to 10 weight percent hydrogen chloride, redispersing the noble metal with an inert gas stream containing about 0.001 to 10 weight percent Cl in the form of $Cl_2$ or Cl- containing organic material, and subsequently reducing the catalyst. It is disclosed that the Cl treatments may optionally occur in the presence of oxygen or sources of oxygen.

U.S. Patent No. 4,851,380, VAN LEIRSBURG et al., is directed to a process for regenerating sulfur contaminated reforming catalysts composed of a zeolite and Group VIII metal which involves intentionally agglomerating the Group VIII metal into large agglomerates and then treating the catalyst with a halogen acid gas to remove sulfur contaminants.

U.S. Patent No. 4,855,269, MOHR, in directed to a process for regenerating contaminated monofunctional, large- pore zeolite catalysts formed and bound using in inorganic binder which involves (a) contacting the catalyst under oxychlorinating conditions with a gas comprising 1% to 21% oxygen, 1% to 4% water, and an effective amount of chlorine atoms to achieve a chlorine to platinum ratio between 4:1 find 1000:1; (b) contacting the catalyst with a gas comprising nitrogen, with a gas rate between 150 and 1500 GHSV, and at a temperature between 454°C and 510°C (850° and 950°F); and (c) contacting the catalyst with a gas comprising hydrogen having less than 1000 ppm water, at a temperature between 426°C and 510°C (800°F and 950°F) and a gas rate between 150 and 1500 GHSV.

U.S. Patent No. 4,810,683, COHN et al., discloses that the activity of non-acidic, zeolite-based Group VIII metal catalysts which have become deactivated, in part due to the deposition of carbonaceous materials, may be restored by subjecting the deactivated catalyst to a procedure which involves a first stop of contacting the deactivated catalyst with a gaseous stream comprising oxygen, a halogen, or a halogen-containing compound or a mixture thereof, and an inert component at regeneration conditions including a

EP 0 523 097 B1

temperature of from 350°C-600°C sufficient to combust at least a portion of said carbonaceous materials for a first period of time. This first step is followed by the second step of reducing the catalyst by contacting the catalyst with a gaseous stream comprising hydrogen at an elevated temperature for a period of time sufficient to produce a reduced/regenerated hydrocarbon conversion catalyst.

In addition to these patents, procedures are disclosed in commonly owned U.S. Patent Application Serial No, (U.S.S.N.) 550,951 FUNG et al., filed November 10, 1983, for improving the activity and selectivity of deactivated type L zeolite-based catalysts by dispersing the catalytic metal throughout the pores or channels of the zeolite. U.S.S.N. 550,951 also discloses various procedures for dispersing the catalyst metal on the zeolite L substrate.

U.S. Patent Application Serial No. 170,503 filed March 21, 1988, in the name of FUNG et al. entitled "Process for the Dispersion of Group VIII metal in large Pore Zeolite Catalysts", the disclosure of which is also hereby incorporated in its entirety herein by reference thereto, discloses the advantages of a reduction step practiced at a temperature sufficiently lower than the chlorination or oxychlorination step and the benefits of cooling the catalyst in the presence of oxygen before the reduction.

U.S. Patent 4,595,669, commonly owned with the present application, which issued from U.S.S.N. 550,902 filed on November 10, 1983 in the name of Shun C. Fung and Samuel Tauster, is directed to a process for improving the dispersion of noble metals by an oxychlorination procedure.

Oxychlorination, i.e., dispersion of the noble metal, may be accomplished by exposing the catalyst at temperatures within the range of 400°C to 530°C for up to ten hours to a gas stream containing 0% to 10% by volume of water; elemental chlorine with or without oxygen; hydrogen chloride and oxygen; chlorinated hydrocarbons, such as carbon tetra-chloride; and oxygen.

It was discovered, however, that the apparatus and methods in accordance with the present invention were required in order to make such regeneration procedures operable in production line-scale plants.

The apparatus and methods in accordance with the present invention are solutions to unexpected problems encountered when regeneration procedures were scaled up from laboratory test equipment to production size plants.

In the laboratory, the inert gas, such as nitrogen, is normally passed once through the catalyst and then discarded. In a large-scale plant, however, once-through gas flow is impractical. Carrier gas is recycled with a fraction of the recirculating gas purged and replaced with fresh make-up inert gas. During regeneration, HCl is expelled from the catalyst into the recirculating inert carrier gas and when the inert carrier gas is recycled, HCl concentration builds up to relatively high levels in the recirculating carrier gas; and high levels of HCl in the carrier gas stream have been found to adversely affect redispersion of the catalytic metals. Accordingly, an HCl trap is installed in the recycled gas line to remove HCl from recycling carrier gas.

Also, during regeneration, a change is made from wet carrier gas to dry carrier gas, and it has been discovered that when carrier gas is recycled, it takes an unacceptably long time to reduce the water content in the carrier gas, which impedes the regeneration of zeolite reforming catalysts. Accordingly, a water trap is installed in the recycled gas line to remove water from recycling carrier gas.

In laboratory units, reactors are regenerated one at a time and gas space velocity is high, e.g., WHSV of 4-10 reciprocal hours. In large scale plants, several reactors are connected in series, and space velocities during regeneration are low, e.g., WHSV of 1.0-1.5 reciprocal hours. As a result, the time to complete the oxychlorination, as evidenced by the appearance of chlorine in the reactor effluent gas, in large scale plants, is excessively long if chlorine is added only to the inlet of the upstream reactor. This exposes catalyst in the upstream reactors to oxychlorination conditions for excessively long times which impairs performance of regenerated catalyst. Accordingly, facilities and procedures are employed to add chlorine to the inlet of each reactor and to achieve complete chlorination of catalyst in all reactors, as evidenced by appearance of chlorine in the reactor outlet gas, at about the same time.

The apparatus of the present invention includes: facilities for feeding, measuring and controlling substances required to regenerate catalyst separately to the inlet to each reactor; facilities for removing halogen and halogen compounds from the feed to the lead reactor in the reactor train; and facilities for removing water from the feed to the lead reactor in the reactor train.

The procedures associated with the apparatus include: (1) treating the catalyst in each reactor with a gas stream comprising halogen, oxygen, and an inert gas, and fixing the time of halogen initiation and halogen flow rate to each reactor in the train such that halogen breakthrough occurs substantially simultaneously from all reactors; (2) reducing the catalytic metals in the catalyst with a reducing agent so as to preclude exposing catalyst to halogen prior to reduction. This is accomplished by reducing the reactors one at a time moving from tail reactor to lead reactor and using the halogen removal facility to remove halogen from gas recycled from the tail reactor outlet to the lead reactor inlet; and (3) reducing the time required to switch from wet to dry conditions when recycling treat gas by removing water from the treat gas

4

using the water removal facility.

SUMMARY OF INVENTION

It has been discovered that certain apparatus and procedure improvements are required to successfully apply regeneration procedures for zeolite based reforming catalysts to large-scale production plants. These improvements are the subject of this invention.

Reforming catalysts, Zeolite catalysts included, deactivate in normal operation due to deposition of coke and agglomeration of dispersed catalytic metals into large particles. Deactivation is progressive. In an attempt to compensate for deactivation of the catalyst, the temperatures of the reactor inlet streams are raised. Eventually, however, maximum temperature limits are approached and the catalyst must be regenerated.

Regeneration of zeolite catalysts includes four basic operations:

i) removal of coke, typically by burning;

ii) redispersion of the agglomerated metal, typically by oxychlorination;

iii) stripping chlorine off the catalyst using wet and dry air; and

iv) reduction of metal chloride to the metal state using a reducing agent, such as hydrogen.

As previously stated, in production scale plants inert carrier gas is recycled to conserve carrier gas. During hydrogen reduction and stripping, HCl is released into the recirculating inert carrier gas and builds up rapidly to high concentration which, it has been discovered, interferes with effective redispersion of the catalytic metals.

In accordance with the present invention, an HCl trap may be included in the recycle gas line between the lead and tail reactors to limit HCl concentration build-up in the recycle gas. The HCl trap removes HCl from the recirculating carrier gas and prevents HCl concentration from building up in the gas stream. The preferred HCl trap is sodium hydroxide on promoted alumina. Katalco's 59-3 is a particularly suitable commercially available sodium hydroxide on promoted alumina which has been successfully employed.

Further, the regeneration procedure requires changing from wet to dry carrier gas during stripping. In large-scale plants, the time required to dry the recycling inert gas stream exceeds prescribed desirable limits so that catalyst regeneration and performance is impaired. In accordance with the present invention, therefore, a water trap is included in the gas recycle loop between the lead and tail reactors to reduce the time required to dry the recycling gas stream. The water trap is also useful for removing water emitted by the catalyst during reduction which, if allowed to build up in the recycling inert gas, would impair catalyst performance. Although the water trap can be any suitable drying material, a 4A mol sieve is particularly preferred.

Another aspect of the present invention arises because the multiplicity of the reactors in the commercial reactor train are connected in series during regeneration, with inert carrier gas flowing sequentially through them. As a practical matter, it is difficult to isolate the reactors so they can be regenerated one at a time. As a result, carrier gas space velocities (ratio of carrier gas flow rate to catalyst volume) are lower in production large-scale plant reactor systems than in laboratory systems.

This causes overchlorination of catalyst in upstream reactors which is deleterious to catalyst performance. The catalyst absorbs chlorine and hydrogen chloride from the carrier gas until the catalyst is saturated with chlorine. The chlorine and hydrogen chloride breakthrough wave moves steadily downstream from the inlet to the lead reactor to the outlet of the tail reactor at a rate directly proportional to the chlorine gas feed rate. Accordingly, in production-scale plants, catalyst in the upstream reactors can be exposed to chlorine and hydrogen chloride for time periods and at concentrations which exceed prescribed desirable limits although these limits are easily satisfied in lab units by isolating the reactors and regenerating them one at a time. This subjects upstream catalyst in production-scale plants to extended exposure to chlorination gases after the catalyst has been oxychlorinated and the chlorine breakthrough wave has moved downstream. Overchlorination impairs regeneration and subsequent performance of the catalyst. Accordingly, an aspect of this invention is to conduct the oxychlorination step to achieve substantially simultaneous halogen breakthrough from all of the reactors.

Therefore, in accordance with the present invention, in order to limit overchlorination of upstream catalyst, apparatus for introducing, metering, and controlling flow of halogen and water into the inlet of each reactor are provided. These facilities are used to initiate oxychlorination redispersion to each reactor separately at different times and at different chlorine feed rates rather than initiating flow of chlorine only to the lead reactor and the downstream reactors. Flow of hydrogen chloride and water to a reactor is started sooner and/or at higher halogen feed rate in proportion to the quantity of catalyst contained in the reactor such that chlorine breakthrough in the effluent from each reactor occurs at about the same time for all

5

reactors even though the reactors contain different amounts of catalyst. This minimizes deleterious exposure of upstream catalyst to chlorination gases after the catalyst has been oxychlorinated and the chlorine breakthrough wave has moved downstream.

Further, it has been discovered that exposing catalyst to HCl after the catalytic metal has been dispersed and reduced is innocuous. In contrast, exposing the catalyst to HCl before the catalyst metal is reduced impairs regeneration and subsequent performance of the catalyst. As previously described, HCl is released from the catalyst into the recycling carrier gas during reduction of the catalytic metal with hydrogen. Build-up of HCl concentration in the recirculating carrier gas stream is mitigated by using an HCl trap in the recycle carrier gas line between the tail and lead reactors. In addition, it has been discovered that it is beneficial to reduce the reactors one at a time in a certain preferred sequence. Therefore, in accordance with the present invention, facilities are provided for initiating flow of hydrogen into all reactors independently. The flow of $H_2$ gas is initiated first into the tail reactor and the HCl trap is employed to prevent HCl released in the tail reactor from being carried into the lead reactor by the recirculating carrier gas.

After the catalyst in the tail reactor has been completely reduced as evidenced by termination of HCl evolution, reduction of catalyst in the reactor immediately upstream of the tail reactor is initiated by starting hydrogen flow into that reactor. HCl is released and is carried into the tail reactor in the carrier gas but it does no harm because catalyst in the tail reactor has already been reduced. Again preferably an HCl trap is employed to remove HCl from the recycling carrier gas to prevent HCl from being carried into the lead reactor, which has not yet been reduced. This operation is again repeated for the next upstream reactors until the lead reactor is reduced.

Further, during reduction, when hydrogen flow to a reactor is initiated, in addition to evolving HCl, the catalyst also releases water into the recirculating carrier gas. The aforementioned water trap in the recycle gas line may be used to prevent build-up of water concentration in the recirculating carrier gas to deleteriously high levels.

## BRIEF DESCRIPTION OF THE DRAWINGS

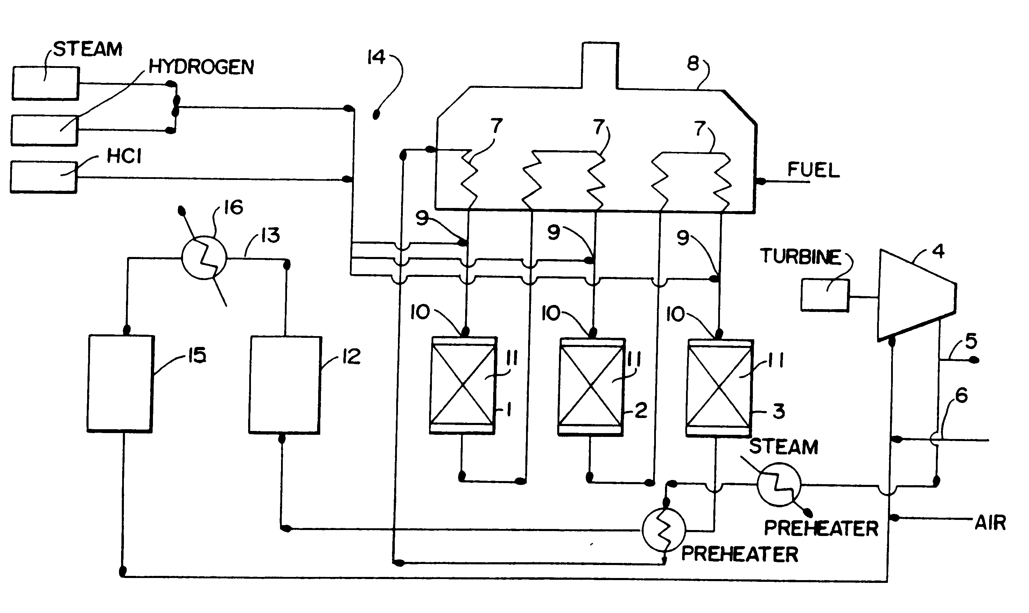

The Figure is a flow diagram of the process employing the apparatus in accordance with the present invention.

## DETAILED DESCRIPTION

The present invention is directed to an apparatus for the regeneration of a deactivated catalyst and redispersion of a catalytic metal in fresh catalyst, said apparatus comprising a plurality of reactors containing catalyst, means for feeding, measuring and controlling water and halogen to regenerate catalyst separately to the inlet of each reactor, means for separation of elemental halogen, halogen containing compounds or water from a gas stream to be passed through the catalyst during regeneration or redispersion treatment and means for removing water which is a water trap or a fixed bed drier. The means for separation includes means for removing a member selected from the group consisting of elemental halogen and halogen-containing compounds from the gas stream. In the embodiment where the means for removing water is a fixed bed drier, the fixed bed drier comprises a mol sieve, which is preferably selected from the group consisting of a 4A mol sieve and a 5A mol sieve. In the embodiment where the means for separation includes means for removing a member selected from the group consisting of a elemental halogen and halogen-containing compounds from the gas stream such means may be selected from the group consisting of a fixed bed adsorber, a water scrubber, and a caustic scrubber, wherein the fixed bed adsorber comprises sodium hydroxide on promoted alumina, and the caustic scrubber comprises means for contacting the gas with caustic solution and means for removing caustic solution containing halogen from the gas stream.

In one embodiment, the means for removing a member selected from the group consisting of elemental halogen and halogen-containing compounds and the means for removing water may be connected in series in a line for supplying the gas stream to the catalyst, in which case the means for removing a member selected from the group consisting of elemental halogen and halogen-containing compounds is located upstream of the means for removing water from the gas stream in the line. The apparatus may also include means for reducing the temperature of the gas stream located upstream of the means for removing water in the line, preferably wherein the means for reducing the temperature of the gas stream is located downstream of the means for removing a member selected from the group consisting of elemental halogen and halogen-containing compounds in the line.

The apparatus in accordance with the present invention may also include a compressor with its suction inlet located downstream from the means for removing water in the line, in addition to means for supplying at least one fluid to the line communicating between a source of the at least one fluid and the line, and means for releasing fluid from the line communicating between the line and the ambient, which is preferably a purge line located downstream from the compressor.

For purposes of the present invention, as used herein, the at least one fluid may be at least one member selected from the group consisting of steam, hydrogen, a hydrogen halide, a source of halogen, air and an inert gas. In one instance, the fluid is a substance or substances required for regeneration of used catalysts and substances required for predispersion of catalytic metal in fresh catalyst selected from the group consisting of steam, hydrogen, and a source of halogen, in which case the means for supplying the at least one fluid is located downstream from the compressor and upstream of the reactor inlets; in another instance, the fluid may be a gas selected from the group consisting of air, oxygen, and an inert gas, wherein the means for supplying is located between the means for removing water from the gas stream and the compressor. Preferably, the inert gas is nitrogen.

In a preferred embodiment, the apparatus in accordance with the present invention includes at least one reactor containing catalyst, and means for introducing substances selected from a group of substances required for regeneration of used catalyst and substances required for predispersion of catalytic metal in fresh catalyst into the reactor, preferably wherein the at least one reactor are a plurality of reactors including a lead reactor and a tail reactor, wherein the lead reactor includes an inlet and the means for introducing the substances is operably connected to add the substances to the reactor through the inlet. Preferably the apparatus in accordance with the present invention includes at least three reactors, wherein the supply of the substances is operably connected to the means for introducing at least one member selected from the group consisting of a source of water, a source of reducing agent, and a source of halogen, preferably wherein the supply of the substances includes a source of steam, a source of hydrogen, as well as a source of HCl. In accordance with the present invention, each of the plurality of reactors includes an inlet, and each of the means for introducing is operably connected to add such substances through the inlet of each of the plurality of reactors. Preferably, the apparatus in accordance with the present invention comprises at least one member selected from the group consisting of means for controlling, means for metering, and means for measuring concentrations of the substances operably connected to the means for introducing.

The catalyst treated in accordance with the present invention preferably comprises a zeolite and at least one Group VIII metal, wherein the zeolite is a large pore zeolite, preferably having a pH within the range of 9.4 to 10.0. Preferably, at least 30% of the large pore zeolite is zeolite L, wherein at least 50% of said zeolite L are crystallites with circular cylinders having an aspect ratio of at least 0.5, and a mean diameter of at least 0.2 microns.

Most preferably, the large pore zeolite comprises exchangeable cations, which are preferably selected from the group consisting of potassium, sodium, strontium, barium, calcium, lithium, magnesium, rubidium, cesium and copper, and mixtures of two or more members selected from the group consisting of potassium, sodium, strontium, barium, calcium lithium, magnesium, rubidium, cesium and copper. The most preferred Group VIII metal is platinum, and the more preferred exchangeable cations in said zeolite are potassium and barium with potassium being the most preferred. Preferably, the zeolite is in the form of aggregated particles, wherein said aggregated particles are selected from the group consisting of extrudates, tablets, and spheres. Preferably, the aggregated particles comprise a binding material selected from the group consisting of metal oxide and clays. More preferably, the binder material is a member selected from the group consisting of alumina, silica and alumina-silicates. In general, however, the catalyst treated in accordance with the present invention may be non- acidic and monofunctional.

The present invention is also directed to a process for treating catalyst comprising at least one Group VIII metal contained in a plurality of reactors comprising exposing the catalyst to a gas comprising halogen, oxygen and inert gas so as to redisperse the metal, wherein said exposing comprises initiating a flow of halogen to each of said reactors, first to the reactor requiring the longest oxy chlorination time, and adjusting the halogen flow rate through the reactors so that halogen breakthrough from the reactor is substantially simultaneous, and reducing the metal in the reactors one at a time moving from tail reactor to lead reactor. One can compute time of exposure to halogen to halogen breakthrough according to the formula:

$$T = (W/R)K$$

where W is the weight of the catalyst in a reactor, R is the rate of halogen flow to that reactor, T is the time of exposure to halogen to halogen breakthrough, and K is a constant that is characteristic of the catalyst and the units selected to express weight, time and volume. Halogen flow is initiated first to the reactor requiring the longest halogen exposure time, second to the reactor requiring the next longest halogen exposure time and moving in this fashion until halogen flow is initiated last into the reactor requiring the shortest halogen exposure time. Initiation times are staggered so that the difference in initiation times equals the difference in required halogen exposure time. Following this procedure halogen breakthrough will occur at about the same time from all reactors. This minimizes needless exposure of catalyst to halogen.

Typically, process plants have at least three reactors, wherein one of the reactors contains the heaviest weight of catalyst and another of said reactors contains the lightest weight of catalyst, and the process involves introducing halogen flow first to the reactor contains the heaviest weight of catalyst and last to another of the reactors containing the lightest weight of the catalyst. In a preferred embodiment, where the at least three reactors include a lead reactor and a tail reactor, wherein one of the reactors containing the heaviest weight of catalyst is the tail reactor, and wherein another of the reactors containing the lightest weight of catalyst is the lead reactor, the halogen flow is introduced first to the tail reactor, and last to the lead reactor.

For purposes of the present invention, the halogen is selected from the group consisting of sources of chlorine, which are selected from the group consisting of $Cl_2$, HCl, and chlorinated hydrocarbons, preferably selected from the group consisting of chloroform, methyl chloride, carbon tetrachloride, 1,2- dichloroethane, trichloroethane, and mixture of one or more members selected from the group consisting of $Cl_2$, HCl, chloroform, methyl chloride, carbon tetrachloride, 1,2- dichloroethane and trichloroethane, preferably wherein the source of chlorine is HCl.

The present invention is also directed to a process for treating a zeolite-based catalyst including at least one Group VIII metal contained in a plurality of reactors including a lead reactor and a tail reactor which involves exposing catalyst including catalytic metal selected from the group of Group VIII metals in an unreduced state contained in one of the reactors to a gas stream containing a reducing agent to substantially completely reduce the Group VIII metal; and maintaining catalyst including the catalytic metal in an unreduced state contained in the other reactors in an atmosphere substantially devoid of at least one member selected from the group consisting of halogen and water. Preferably the process in accordance with this embodiment of the present invention also involves introducing a gas stream containing a reducing agent into another of the reactors containing catalyst including the catalytic metal in an unreduced state and exposing the catalytic metal to substantially completely reduce the catalytic metal while maintaining catalyst including the catalytic metal in an atmosphere substantially devoid of at least one member selected from the group consisting of halogen and water until the catalyst including the catalytic metal in each of said reactors is substantially completely reduced whereby the catalyst metal is only exposed to a halogen subsequent to being reduced. Typically, the plurality of reactors include a lead reactor and a tail reactor and wherein the step of exposing involves introducing a gas stream which is substantially devoid of at least one member selected from the group consisting of halogen, halogen-containing compounds, and water to the tail reactor; passing the gas stream through the tail reactor; subsequently introducing the gas stream to the lead reactor; and passing the gas stream through the lead reactor until the catalytic metal of said catalyst contained in the lead reactor is substantially completely reduced.

More typically, the plurality of reactors are a series of reactors including at least one intermediate reactor positioned between the lead reactor and the tail reactor and the step of introducing the gas stream to each reactor is performed sequentially first through the tail reactor until reduction of the catalytic metal of the catalyst contained in the tail reactor is substantially complete; next introducing and passing the gas stream through each intermediate reactor until reduction of said catalytic metal of the catalyst contained in each intermediate reactor is sequentially, substantially completed; and finally introducing and passing the gas stream through the lead reactor until reduction of the catalytic metal of the catalyst contained in the tail reactor is substantially complete.

In addition, a gas stream including HCl and water is discharged from the tail reactor and a gas stream substantially devoid of HCl and water is introduced to the lead reactor, preferably wherein the HCl and $H_2O$ is removed from the discharged gas stream before the gas stream substantially devoid of HCl and water is reintroduced into the lead reactor.

Preferably, water is removed from the discharged gas stream, more preferably by passing the gas stream through means for removing water, which is a water trap, such as a mol sieve selected from the group consisting of a 4A mol sieve and 5A mol sieve, so as to result in a substantially dry gas stream substantially devoid of HCl wherein the step of exposing involves introducing the substantially dry gas stream into the lead reactor. The step of removing HCl involves passing the discharged gas stream through means for removing HCl from the gas discharge stream to result in a gas stream substantially devoid of HCl, wherein the means for removing HCl is an HCl trap. More preferably the process also involves

8

removing water from the discharged gas stream substantially devoid of HCl, wherein the step of removing water involves passing the discharged gas stream substantially devoid of HCl through means for separating water from the discharged gas stream, such as a water trap, which is preferably a mol sieve, preferably selected from the group consisting of a 4A mol sieve and a 5A mol sieve.

A preferred embodiment of the process of this invention includes reducing the temperature of the gas stream substantially devoid of HCl to result in a cooled gas stream prior to passing the cooled gas stream through the means for separating water from the gas stream.

The most preferred embodiment of the present invention is directed to a process for treating zeolite and at least one Group VIII metal contained in at least two reactors including a lead reactor and a tail reactor, in which the hydrogen reduction step includes: (a) reducing the dispersion of the at least one Group VIII metal in said catalyst; (b) recirculating a carrier gas stream discharged from one of the reactors to an inlet of another of the reactors; and (c) removing at least one member selected from the group consisting of HCl, water and mixtures of HCl and water from the discharged gas stream before reintroducing the gas stream into said inlet.

Preferably the discharged gas stream is cooled to a temperature below the dew point of said gas stream. The process also preferably involves removing water from the cooled gas stream, so as to result in a substantially dry carrier gas stream and then introducing the substantially dry gas stream into said lead reactor.

In this embodiment, the process preferably also involves exposing the catalyst in an unreduced state contained in one of said reactors to a gas stream containing a reducing agent to substantially completely reduce the Group VIII metal; and maintaining the catalyst including catalytic metal in an unreduced state contained in the other reactors in an atmosphere substantially devoid of at least one member selected from the group consisting of halogen and water, and introducing a gas stream containing a reducing agent into the next upstream reactor containing catalyst in an unreduced state and exposing the catalytic metal to the gas stream to substantially completely reduce catalytic metal while maintaining unreduced catalyst in an atmosphere substantially devoid of at least one member selected from the group consisting of halogen and water until the catalyst in each of the reactors is substantially completely reduced whereby the catalyst metal is only exposed to a halogen subsequent to being reduced. The plurality of reactors include a lead reactor and a tail reactor and the step of exposing the catalyst to the gas stream involves introducing a gas stream which is substantially devoid of at least one member selected from the group consisting of halogen and water to the tail reactor; passing the gas stream through the tail reactor; subsequently introducing the gas stream to the lead reactor; and passing the gas stream through the lead reactor until said catalytic metal of said catalyst contained in said lead reactor is substantially completely reduced. Preferably the plurality of reactor are a series of reactors including at least one intermediate reactor positioned between the lead reactor and the tail reactor and the step of introducing the gas stream to each reactor is performed sequentially first through the tail reactor until reduction of the catalytic metal of the catalyst contained in the tail reactor is substantially complete; next introducing and passing the gas stream through each intermediate reactor until reduction of the catalytic metal of the catalyst contained in each intermediate reactor is sequentially, substantially completed; and finally introducing and passing the gas stream through the lead reactor until reduction of the catalytic metal of the catalyst contained in the lead reactor is substantially complete. The process of this embodiment of the present invention further involves discharging a gas stream including HCl and water from the tail reactor and introducing a gas stream substantially devoid of HCl and water to the lead reactor, wherein the HCl and $H_2O$ is removed from the discharged gas stream before reintroducing the gas stream substantially devoid of HCl and water into the lead reactor.

The process in accordance with the present invention also involves exposing deactivated catalyst contained in the reactors to oxygen and halogen in order to redisperse metal and result in substantially simultaneous halogen breakthrough for all of said reactors, preferably by initiating halogen flow at a flow rate to each of said reactors and adjusting the halogen flow rate through said reactors so that halogen breakthrough is substantially simultaneous from each of said reactors notwithstanding that at least two of the plurality of reactors contain a different amount of catalyst.

The Figure is a flow chart showing a catalytic reformer in regeneration alignment in accordance with the present invention. The following discussion explains how the apparatus and procedures in accordance with the present invention are used to improve regeneration of large pore zeolite based reforming catalysts and to contrast the improvements with conventional reformer regeneration apparatus and procedures.

Referring to the figure, inert carrier gas, typically nitrogen, is recirculated through the reactors 1, 2, 3 piped in series using the recycle gas compressor 4. A fraction (typically 10%) of the recirculating carrier gas is continuously purged through purge line 5 to prevent build-up of impurities in the recycling carrier gas, and fresh (make-up) nitrogen is added through line 6 to maintain required system pressure. Specified reactor inlet temperatures are maintained using the feed effluent heat exchangers 7 and furnaces 8. In a conventional reformer the chemicals used to regenerate the catalyst, i.e., water (e.g., as steam), halogen, and hydrogen, are introduced at only one point in the circulating carrier gas loop, typically, just upstream of the recycle gas compressor. However, the apparatus improvements of this invention include means for feeding, metering and controlling steam, reducing agent (hydrogen), source of halogen (preferably HCl), to the inlets 10 of each of the reactors in the train. These separate means for feeding, metering and controlling such substances are particularly useful in the oxyhalogenation step of the regeneration procedure. If conventional procedures were used without the improvements of the present invention, i.e., wherein halogen were added only to the lead reactor, the time to halogen breakthrough at the outlet of the tail reactor could be 12 to 24 hours, and the catalyst near the inlet to the lead reactor would be exposed to halogen for 12 to 24 hours after passage of the chlorine breakthrough wave whereas the preferred exposure limit achieved in accordance with the present invention is one to two hours.

In accordance with the present invention, therefore, halogen and water are fed to the inlet 10 of all reactors 1,2,3 in the train. The halogen flow rate to each reactor and time of initiation of halogen flow are selected, as described in more detail hereinbelow so that chlorine breakthrough from all reactors occurs at about the same time and oxychlorination time through the reactor with the most catalyst charge does not exceed about six hours.

Oxychlorination time can readily be computed using the equation:

$$T = (W/R)K$$

where W is the weight of catalyst in the reactor, R is the weight rate of halogen addition, T is the oxychlorination time to breakthrough, and K is a constant that is characteristic of the catalyst and the units selected to express weight and time, such that halogen flow is initiated first to the reactor requiring the longest halogen exposure time, second to the reactor requiring the second longest exposure time and continuing in this fashion until halogen flow is initiated last to the reactor requiring the shortest halogen exposure time and staggering the time separations between initiations of halogen wherein the initiation time delays are equal to the differences between estimated halogen exposure times so that the required halogen exposure time to breakthrough is completed simultaneously for all reactors.

Accordingly, the flow of halogen is initiated first to the reactor requiring the longest oxychlorination time. This is usually the reactor containing the most catalyst 11, which is shown in the Figure as reactor 3. Flow of halogen is next initiated to the reactor requiring the next longest oxychlorination time after a time delay from halogen initiation to the first reactor equal to the time increment or difference between the oxychlorination required for the first reactor and the oxychlorination time required for the second reactor. This procedure is repeated for the other reactor in the train. With this procedure halogen breakthrough will occur simultaneously from all reactor and exposure of oxychlorinated catalyst to halogen will be minimized.

Recirculation of carrier gas containing halogen is continued for one to five hours after halogen breakthrough to ensure that all the catalyst is thoroughly oxyhalogenated.

The apparatus in accordance with the present invention also includes a halogen trap 12 in the carrier gas recycle line 13 between the tail reactor 3 and lead reactor 1 and means or devices 14, for feeding, metering and controlling flow of reducing agent (typically hydrogen) to each reactor as shown in the Figure. The halogen trap 12 can be any material capable of quantitative absorption of the halogen released from the catalyst when the catalyst is reduced. One appropriate halogen trap is sodium hydroxide on an alumina extrudate such as Katalco's 59-3. The halogen trap is used during the reduction step. In conventional reformer systems which do not have a halogen trap, halogen concentration tends to build up rapidly in the recycling carrier gas when the reducing agent is fed into the carrier gas, and the catalyst is exposed to high concentrations of halogen before and during reduction which impairs regeneration and subsequent catalyst performance. In accordance with this invention, flow of reducing agent is started first to the tail reactor. In the case where the redispersion agent is chlorine and the reducing agent is hydrogen, HCl is evolved from the catalyst into the carrier gas. The HCl is adsorbed by the halogen trap which precludes build-up of HCl concentration in the recirculating carrier gas and shields the upstream reactors from exposure to HCl while they are still in a vulnerable unreduced state.

When reduction of the catalyst in the tail reactor is complete as evidenced by termination of HCl evolution, flow of reducing agent to the reactor next upstream to the tail reactor is started. This process is repeated until the lead reactor is reduced.

The apparatus in accordance with the present invention also includes a water trap 15 in the recycle carrier gas line between the tail and lead reactors as shown in the Figure. A cooler heat exchanger 16 is included upstream of the water trap to cool the carrier gas which increases the water retention capacity of the water trap. The water trap can be any material capable of quantitatively absorbing water out of the carrier gas stream. A preferred water trap is 4A mol sieve. Typically, the water trap is periodically regenerated by drying the trap bed with hot dry inert gas. In accordance with the present invention, the water trap is used to good advantage during the transition between wet and dry air soak.

The prescribed transition time is three to four hours which is achieved using the water trap; without the water trap it could take substantially longer to dry the system in making the wet to dry transition and the excessively long wet air soak would impair regeneration and subsequent catalyst performance.

Large Pore Zeolite Reforming Catalysts

The present invention is directed to procedures and apparatus which have been discovered to be particularly preferred for regenerating large-pore zeolite catalysts. The catalysts for which the discoveries of the present invention are particularly suitable include large-pore zeolites, at least one Group VIII metal, and one or more cations from Group IA or IIA. As used herein, large pore zeolites are defined as zeolites having an effective pore diameter of between 6 and 15 Angstroms. The most preferred catalyst used in accordance with the present invention and which has been determined to perform exceptionally well as a light naphtha reforming catalyst substrate is a form of potassium zeolite L. It should be understood, however, that although the present invention may be described herein and examples given for performing the process and using the apparatus of the regeneration system in accordance with the present invention with respect to potassium zeolite L, such discussions and examples are presented as being illustrative of the preferred embodiment, and are not meant to limit the present invention which is appropriate for the regeneration of zeolite based reforming catalysts and preferably large pore zeolite catalysts.

Zeolite L, its x-ray diffraction pattern, and its properties, as well as its preparation are described in detail in U.S. Patent No. 3,216,789. A composition of type L-zeolite expressed as mole ratios of oxides may be represented as follows:

$(0.9-1.3)M_2/nO:A1_2O_3(5.2-6.9) SiO_2:yH_2O$

wherein M designates a cation, n represents the valence of M and y may be any value from 0 to 9. The chemical formula can vary without changing the crystalline structure which is the distinguishing feature of zeolite L. For example, the silicon to aluminum ratio lay vary from 1.5 to 3.5.

The catalyst performance of a zeolite L reforming catalyst depends on the morphology, i.e., the shape, form and regularity of the zeolite crystals. The preferred form of zeolite is described in U.S. Patent No, 4,544,539 and procedures to synthesize it are described in U.S. Patent No. 4,701,315. The preferred form of zeolite L is distinguished from other zeolite L in that at least 50% of the zeolite crystallites are circular cylinders with an aspect ratio of at least 0.5 and mean diameter of at least 0.5 microns.

Zeolites normally contain exchangeable cations and zeolite L is usually synthesized in the potassium form. However, other cations can be incorporated into the zeolite by ion exchange with potassium, by impregnation, or by synthesis. Cations other than potassium that make useful catalysts are alkali metals selected from Group 1A and are preferably selected from the group consisting of sodium, lithium, rubidium and cesium, and alkaline earth metals selected from Group IIA and preferably members selected from the group consisting of barium, calcium and strontium. A member selected from the group consisting of magnesium and barium if more preferred. The most preferred exchangeable cation is potassium,

To be useful in production line-scale reactors, the catalysts should be formed into aggregates, such as pellets, tablets, extrudates, or spheres having a dimension within the range of 0.8mm to 1.6mm (1/32 to 1/16 of an inch) size for use in production line-scales packed bed reactors using conventional catalyst forming technology, for example as disclosed in U.S. Patent Nos. 3,326,818; 3,557,024; 4,046,713; 4,458,025; 4,517,306; and 4,447,316. The aggregates may be formed using 10% to 85% inorganic oxides on zeolite as a matrix to bind the zeolite. Suitable binders include alumina, silica, alumina-silicates and clays. It is preferred to extrude catalysts using alumina as the binder matrix.

The catalysts must also contain one or more Group VIII metals well dispersed in the zeolite. Suitable metals include members selected from the group consisting of platinum, iridium, palladium and rhenium. The metal most preferred is platinum. The percentage of platinum in the most preferred catalyst is in the range of 0.1 to 2% by weight of the catalyst.

The Group VIII metals can be introduced into the zeolite after forming the zeolite into an aggregate, or into zeolite before forming into an aggregate, by either impregnation or ion exchange. Also, procedures are available for incorporating catalytic metals into the zeolite during synthesis of the zeolite. For impregnation, the platinum source can be aqueous solutions comprising a member selected from the group consisting of tetraamineplatinum (II) nitrate, tetraamineplatinum (II) chloride, and dinitrodiamino-platinum (II). For ion exchange a cationic platinum complex, such as tetraamineplatinum (II) nitrate is suitable. It is preferred, however, to load the catalytic metal into the aggregate or extrudate using a procedure in which both the final pH and excess potassium of the extrudate is controlled as it is withdrawn from the loading vessel. A preferred metal loading procedure is described in detail in U.S. Patent No. 4,568,656.

It has been determined that zeolite catalysts in which the Group VIII metals are dispersed such that at least 90% of the metal particles have diameters less than 7 Angstroms are superior reforming catalysts and are, therefore, preferred. The catalysts preferred for purposes of the present invention are described in U.S. Patents Nos. 4,595,668, 4,595,669, and 4,595,670.

Table 1 describes the operating steps and parameters of one preferred procedure used in accordance with the present invention to regenerate zeolite catalysts. The procedure is typical of those which can be employed for purposes of the present invention and is meant to be viewed as a representative example of the procedures which can be used. Included are critical conditions which must be attained to achieve maximum recovered activity.

## TABLE 1

### Regeneration Procedure

| Step | Hrs. | Description | $O_2$ | $H_2O$ | HCl | $Cl_2$ | $CO_2$ | Deg.C | HCl Trap On | $H_2O$ Trap On |
|------|------|-------------|-------|--------|-----|--------|--------|-------|-------------|----------------|
| 1 | 1.0 | Dry Primary Burn | 2000 | 0 | 0 | 0 | 18000 | 445 | - | - |
| 2 | 23.0 | Dry Secondary Burn | 3000 | 0 | 0 | 0 | 0 | 445 | - | - |
| 3 | 1.5 | Adjust to O/C | 8400 | 6600 | 0 | 0 | 0 | 510 | - | - |
| 4 | 2.0 | Oxychlorination | 8400 | 6600 | 550 | 0 | 0 | 510 | - | - |
| 5 | 4.5 | Oxychlorination After Breakthrough | 8400 | 6600 | 550 | 60 | 0 | 510 | - | - |
| 6 | 4.0 | Oxychlorination Cooldown | 8400 | 6600 | 550 | - | - | 510-345 | - | - |
| 7 | 3.0 | Wet Air Soak | 8400 | 6600 | 0 | 0 | 0 | 345 | X | - |
| 8 | 1.0 | Dry Air Soak | 8400 | 0 | 0 | 0 | 0 | 345 | X | X |
| 9 | 1.0 | $H_2$ Purge | 0 | 0 | 0 | 0 | 0 | 345 | X | X |
| 10 | 2.25 | $H_2$ Reduction (2% $H_2$) | 0 | 0 | 500 MAX | 0 | 0 | 345 | X | X |

Example 1

An extruded catalyst, produced substantially in conformance with the previous discussed methods and containing 28 wt. % alumina binder and 72% zeolite, impregnated with 0.64 wt. % platinum, was deactivated at reforming conditions.

The catalyst was regenerated using the procedure of Table 1 except that the HCl trap 1 and drier 2 were bypassed. As a result, HCl concentration in the recycle gas rose to 650 vppm during reduction and the dryout time after wet air soak was 4 hours, both undesirably high.

The activity of the catalyst was determined when the catalyst was fresh and after the regeneration. The key measure of regeneration efficacy is recovery of at least fresh activity. The catalyst activity test (CAT) used is an accelerated test which measures activity:

The CAT test is performed at 510°C, using a feed which is 60 wt. % normal hexane and 40 wt.% methyl pentanes, at a hydrogen to feed molar ratio of 4.5 to 1.0, 98 psia hydrogen partial pressure and 8.0 whsv. The test index is % benzene yield after 46 hours. The CAT benzene yield is an accurate index of the relative activity of reforming catalysts.

The CAT benzene yield was 31.3 wt.% for the fresh catalyst and only 27.0 wt.% for the regenerated catalyst; regeneration was unsatisfactory.

12

This example shows that activity recovery was unsatisfactory when a zeolite catalyst was regenerated using a conventional regeneration system and procedures.

Example 2

A zeolite L reforming catalyst was deactivated at reforming conditions and regenerated in the same unit as in Example 1, using the procedure of Table 1, except that the HCl trap 1 and drier 2 were included in the recycle in the recycle gas loop.

The HCl concentration peaked at 250 vppm during reduction, and the dryout time after the wet air soak was 1.5 hours. The CAT rating of the regenerated catalyst was 32.5 wt.% benzene compared with 31.3 wt.% benzene activity for the fresh catalyst. With the apparatus and procedures of this present invention the activity of the catalyst was higher than for the fresh catalyst.

This example shows that activity recovery was satisfactory when a zeolite catalyst was regenerated using the equipment and procedures of the present invention.

From the foregoing description, one skilled in the art can easily ascertain the essential characteristics of the invention and, can make various changes and modifications of the invention and adapt it to various usages and conditions.

## Claims

1. An apparatus for regeneration of a deactivated catalyst and redispersion of a catalytic metal in fresh catalyst, said apparatus comprising:
a plurality of reactors containing catalyst, means for feeding, measuring and controlling water and halogen to regenerate catalyst separately to the inlet of each reactor, means for separation of elemental halogen, a halogen-containing compound or water from a gas stream to be passed through the catalyst during a regeneration or redispersion treatment and means for removing water which is a water trap or a fixed bed drier.

2. The apparatus in accordance with claim 1, wherein said fixed bed drier comprises a mol sieve.

3. The apparatus in accordance with claim 1 or claim 2 containing a means for removing elemental halogen or a halogen-containing compound from said gas stream.

4. The apparatus in accordance with claim 3, wherein said means for removing elemental halogen or a halogen-containing compound is a fixed bed adsorber, a water scrubber or a caustic scrubber.

5. The apparatus in accordance with claim 4, wherein said fixed bed adsorber comprises sodium hydroxide on promoted alumina.

6. The apparatus in accordance with any one of claims 3 to 5, wherein said means for removing elemental halogen or halogen-containing compound and said means for removing water are connected in series in a line for supplying said gas stream to said catalyst.

7. The apparatus in accordance with any one of claims 1 to 6, comprising means for reducing the temperature of said stream, which means is located upstream of the means for removing water.

8. The apparatus in accordance with claim 7, wherein said means for reducing the temperature of said gas stream is located downstream of a means for removing elemental halogen or a halogen-containing compound.

9. The apparatus in accordance with any one of the preceding claims, wherein said apparatus further comprises a compressor with suction inlet located downstream from a means for removing water.

10. The apparatus in accordance with any one of the preceding claims, wherein a means for removing elemental halogen or halogen-containing compound and a means for removing water are connected in series in a line for recycling said gas stream from the tail reactor to the lead reactor in the series.

**11.** A process for treating catalyst comprising at least one Group VIII metal and contained in a plurality of reactors, comprising exposing the catalyst to a gas comprising halogen, oxygen and an inert gas so as to redisperse said metal, wherein said exposing comprises initiating a flow of halogen to each of said reactors, first to the reactor requiring the longest oxychlorination time and adjusting the halogen flow rate through said reactors so that halogen breakthrough from said reactors is substantially simultaneous, and reducing the metal in the reactors one at a time moving from tail reactor to lead reactor.

**12.** The process as defined in claim 11 comprising adjusting said halogen flow rate through each of said reactors so as to result in substantially simultaneous halogen breakthrough for all of said reactors in accordance with the following equation:

$$T = W/RC$$

wherein W is the weight of the catalyst in each of said reactors, R is the weight rate of halogen flow, T is the oxychlorination time and K is a constant that is characteristic of the catalyst and the units selected to express weight and time.

**13.** The process as defined by claim 11 or claim 12 wherein said initiating comprises introducing halogen flow first to the reactor containing the heaviest weight of catalyst and last to the reactor containing the lightest weight of said catalyst.

**14.** A process according to any one of claims 11 to 13 for treating a zeolite-based catalyst comprising at least one Group VIII metal contained in a plurality of reactors including a lead reactor and a tail reactor wherein reducing the metal in the reactors one at a time is achieved by

exposing catalyst contained in one of said reactors and comprising a Group VIII metal in an unreduced state to a gas stream containing a reducing agent to substantially completely reduce said Group VIII metal; and

maintaining catalyst comprising said metal in an unreduced state contained in other said reactors in an atmosphere substantially devoid of halogen or devoid of water.

**15.** The process as defined by claim 14, further comprising:

subsequently introducing a gas stream containing a reducing agent into another of said reactors containing catalytic metal in an unreduced state, and exposing said catalytic metal to substantially completely reduce it, while maintaining catalyst comprising said catalytic metal in an atmosphere substantially devoid of halogen or devoid of water, until catalyst comprising said catalytic metal in each of said reactors is substantially completely reduced whereby said catalyst metal is only exposed to a halogen subsequent to being reduced.

**16.** The process as defined by any of claims 11 to 15, comprising discharging a gas stream from the tail reactor comprising HC1 and water and introducing a gas stream substantially devoid of HC1 and water to the lead reactor.

**17.** The process as defined by claim 16, comprising removing HC1 and $H_2O$ from the discharged gas stream before reintroducing the gas stream substantially devoid of HC1 and water into said lead reactor.

**18.** The process as defined by any one of claims 11 to 15, further comprising exposing deactivated catalyst contained in said reactors to oxygen and halogen in order to redisperse said metal and result in substantially simultaneous halogen breakthrough for of all said reactors.

**19.** A process in accordance with any one of claims 11 to 18, wherein said catalyst comprises a zeolite and at least one Group VIII metal.

**20.** The process in accordance with claim 19, wherein the zeolite is a large pore zeolite, at least 30% of which is zeolite L.

**21.** The process in accordance with claim 19, wherein said large pore zeolite comprises exchangeable cations.

**22.** The process in accordance with claim 18 or 19, wherein said exchangeable cations in said zeolite are potassium or barium.

**23.** The process in accordance with any of claims 11 to 22, wherein said at least one Group VIII metal is platinum.

**Patentansprüche**

**1.** Vorrichtung zur Regenerierung eines desaktivierten Katalysators und zur erneuten Dispergierung eines katalytischen Metalls in frischem Katalysator, die
mehrere Reaktoren, die Katalysator enthalten, Einrichtungen zum getrennten Zuführen, Abmessen und Steuern von Wasser und Halogen zur Regenerierung des Katalysators am Einlaß jedes Reaktors, Einrichtungen zur Abtrennung von elementarem Halogen, einer halogenhaltigen Verbindung oder Wasser aus einem Gasstrom, der während einer Regenerierungsbehandlung oder Behandlung zur erneuten Dispergierung durch den Katalysator geleitet wird, und Einrichtungen zur Wasserentfernung umfaßt, die ein Wasserabscheider oder ein Festbetttrockner sind.

**2.** Vorrichtung nach Anspruch 1, bei der der Festbetttrockner ein Molekularsieb umfaßt.

**3.** Vorrichtung nach Anspruch 1 oder Anspruch 2, die eine Einrichtung zur Entfernung von elementarem Halogen oder einer halogenhaltigen Verbindung aus dem Gasstrom enthält.

**4.** Vorrichtung nach Anspruch 3, bei der die Einrichtung zur Entfernung von elementarem Halogen oder einer halogenhaltigen Verbindung ein Festbettadsorber, ein Wasserwaschturm (Wasserskrubber) oder ein Alkaliwaschturm (Alkaliskrubber) ist.

**5.** Vorrichtung nach Anspruch 4, bei der der Festbettadsorber Natriumhydroxid auf Aluminiumoxid mit Promoter umfaßt.

**6.** Vorrichtung nach einem der Ansprüche 3 bis 5, bei der die Einrichtungen zur Entfernung von elementarem Halogen oder halogenhaltiger Verbindung und die Einrichtungen zur Entfernung von Wasser in einer Leitung zur Versorgung des Katalysators mit dem Gasstrom in Reihe verbunden sind.

**7.** Vorrichtung nach einem der Ansprüche 1 bis 6, die Einrichtungen zur Verringerung der Temperatur des Stroms umfaßt, wobei die Einrichtungen stromaufwärts von der Einrichtung zur Wasserentfernung angeordnet ist.

**8.** Vorrichtung nach Anspruch 7, bei der die Einrichtungen zur Verringerung der Temperatur des Gasstroms stromabwärts von einer Einrichtung zur Entfernung von elementarem Halogen oder einer halogenhaltigen Verbindung angeordnet sind.

**9.** Vorrichtung nach einem der vorhergehenden Ansprüche, bei der die Vorrichtung außerdem einen Kompressor mit Saugeinlaß umfaßt, der stromabwärts von einer Einrichtung zur Wasserentfernung angeordnet ist.

**10.** Vorrichtung nach einem der vorhergehenden Ansprüche, bei der eine Einrichtung zur Entfernung von elementarem Halogen oder halogenhaltiger Verbindung und eine Einrichtung zur Entfernung von Wasser in einer Leitung zur Rückführung des Gasstroms von dem letzten Reaktor zu dem ersten Reaktor in der Reihe in Reihe verbunden sind.

**11.** Verfahren zur Behandlung von Katalysator, der mindestens ein Gruppe-VIII-Metall umfaßt und in mehreren Reaktoren enthalten ist, bei dem der Katalysator einem Gas ausgesetzt wird, das Halogen, Sauerstoff und ein Inertgas umfaßt, um das Metall erneut zu dispergieren, wobei in der Stufe, in der der Katalysator dem Gasstrom ausgesetzt wird, eine Strömung von Halogen zu jedem der Reaktoren initiiert wird, zuerst zu dem Reaktor, der die längste Oxychlorierungsdauer erfordert, und die Halogenströmungsgeschwindigkeit durch die Reaktoren hindurch so eingestellt wird, daß der Halogendurchbruch aus diesen Reaktoren im wesentlichen gleichzeitig erfolgt, und das Metall in den Reaktoren jeweils in einem zur Zeit von dem letzten Reaktor ausgehend bis zu dem ersten Reaktor reduziert wird.

EP 0 523 097 B1

12. Verfahren nach Anspruch 11, bei dem die Halogenströmungsgeschwindigkeit durch jeden der Reaktoren hindurch so eingestellt wird, daß sie zu einem im wesentlichen gleichzeitig erfolgenden Halogendurchbruch aus allen der Reaktoren gemäß der folgenden Gleichung

$$T = (W/R)K$$

führt, wobei W das Gewicht des Katalysators in jedem der Reaktoren ist, R die Gewichtgeschwindigkeit der Halogen-strömung ist, T die Oxychlorierungszeit ist und K eine Konstante ist, die für den Katalysator und die zum Ausdruck von Gewicht und Zeit verwendeten Einheiten charakteristisch ist.

13. Verfahren nach Anspruch 11 oder Anspruch 12, bei dem beim Initiieren die Halogenströmung zuerst in den Reaktor, der das schwerste Katalysatorgewicht enthält, und zuletzt in den Reaktor, der das leichteste Katalysatorgewicht enthält, eingebracht wird.

14. Verfahren nach einem der Ansprüche 11 bis 13 zur Behandlung eines Katalysators auf Zeolithbasis, der mindestens ein Gruppe-VIII-Metall umfaßt, welcher in mehreren Reaktoren einschließlich eines ersten Reaktors und eines letzten Reaktors enthalten ist, wobei das Reduzieren des Metalls in den Reaktoren in jeweils einem zur Zeit dadurch erreicht wird, daß Katalysator, der in einem der Reaktoren enthalten ist und ein Gruppe-VIII-Metall in einem nicht reduzierten Zustand enthält, einem Gasstrom ausgesetzt wird, der ein Reduktionsmittel enthält, um das Gruppe-VIII-Metall im wesentlichen vollständig zu reduzieren, und
Katalysator, der das Metall in einem nicht reduzierten Zustand umfaßt und in den anderen Reaktoren enthalten ist, unter einer Atmosphäre gehalten wird, die im wesentlichen frei von Halogen oder frei von Wasser ist.

15. Verfahren nach Anspruch 14, bei dem außerdem
nachfolgend ein Gasstrom, der ein Reduktionsmittel enthält, in einen weiteren der Reaktoren, der katalytisches Metall in einem nicht reduzierten Zustand enthält, eingebracht wird und das katalytische Metall dem Gasstrom ausgesetzt wird, um es im wesentlichen vollständig zu reduzieren, während Katalysator, der das katalytische Metall umfaßt, in einer Atmosphäre gehalten wird, die im wesentlichen frei von Halogen oder frei von Wasser ist, bis der Katalysator, der das katalytische Metall umfaßt, in jedem der Reaktoren im wesentlichen vollständig reduziert ist, wodurch das Katalysatormetall nur einem Halogen ausgesetzt wird, nachdem es reduziert worden ist.

16. Verfahren nach einem der Ansprüche 11 bis 15, bei dem ein Gasstrom, der HCl und Wasser umfaßt, aus dem letzten Reaktor entnommen wird und ein Gasstrom, der im wesentlichen frei von HCl und Wasser ist, in den ersten Reaktor eingebracht wird.

17. Verfahren nach Anspruch 16, bei dem HCl und $H_2O$ aus dem entnommenen Gasstrom entfernt werden, bevor der Gasstrom, der im wesentlichen frei von HCl und Wasser ist, erneut in den ersten Reaktor eingebracht wird.

18. Verfahren nach einem der Ansprüche 11 bis 15, bei dem außerdem der desaktivierte Katalysator, der in den Reaktoren enthalten ist, Sauerstoff und Halogen ausgesetzt wird, um das Metall erneut zu dispergieren und zu einem im wesentlichen gleichzeitig erfolgenden Halogendurchbruch bei allen der Reaktoren zu führen.

19. Verfahren nach einem der Ansprüche 11 bis 18, bei dem der Katalysator Zeolith und mindestens ein Gruppe-VIII-Metall umfaßt.

20. Verfahren nach Anspruch 19, bei dem der Zeolith großporiger Zeolith ist, von dem mindestens 30 % Zeolith L ist.

21. Verfahren nach Anspruch 19, bei dem der großporige Zeolith austauschbare Kationen umfaßt.

22. Verfahren nach Anspruch 18 oder 19, bei dem die austauschbaren Kationen in dem Zeolithen Kalium oder Barium sind.

16

**23.** Verfahren nach einem der Ansprüche 11 bis 22, bei dem mindestens ein Gruppe-VIII-Metall Platin ist.

**Revendications**

1. Appareil pour la régénération d'un catalyseur désactivé et la redispersion d'un métal catalytique dans un catalyseur frais, ledit appareil comprenant :
   une pluralité de réacteurs contenant un catalyseur, un moyen d'introduction, de dosage et de régulation d'eau et d'un halogène pour régénérer le catalyseur séparément à l'orifice d'admission de chaque réacteur, un moyen pour séparer un halogène élémentaire, un composé contenant un halogène ou de l'eau d'un courant gazeux à faire passer à travers le catalyseur au cours d'un traitement de régénération ou de redispersion, et un moyen pour éliminer l'eau, qui est un piège à eau ou un dispositif de séchage à lit fixe.

2. Appareil suivant la revendication 1, dans lequel le dispositif de séchage à lit fixe comprend un tamis moléculaire.

3. Appareil suivant la revendication 1 ou la revendication 2, contenant un moyen pour séparer un halogène élémentaire ou un composé contenant un halogène du courant gazeux.

4. Appareil suivant la revendication 3, dans lequel le moyen pour séparer un halogène élémentaire ou un composé contenant un halogène est un adsorbeur à lit fixe, un épurateur à eau ou un épurateur renfermant une base caustique.

5. Appareil suivant la revendication 4, dans lequel l'adsorbeur à lit fixe comprend de l'hydroxyde de sodium sur de l'alumine activée.

6. Appareil suivant l'une quelconque des revendications 3 à 5, dans lequel le moyen pour séparer un halogène élémentaire ou un composé contenant un halogène et le moyen pour éliminer l'eau sont connectés en série dans un conduit destiné à amener le courant gazeux au catalyseur.

7. Appareil suivant l'une quelconque des revendications 1 à 6, comprenant un moyen pour abaisser la température du courant, moyen qui est situé en amont du moyen pour éliminer l'eau.

8. Appareil suivant la revendication 7, dans lequel le moyen pour abaisser la température du courant gazeux est situé en aval d'un moyen pour séparer un halogène élémentaire ou un composé contenant un halogène.

9. Appareil suivant l'une quelconque des revendications précédentes, ledit appareil comprenant en outre un compresseur avec un orifice d'aspiration situé en aval d'un moyen pour éliminer l'eau.

10. Appareil suivant l'une quelconque des revendications précédentes, dans lequel un moyen pour séparer un halogène élémentaire ou un composé contenant un halogène et un moyen pour éliminer l'eau sont connectés en série dans un conduit de recyclage du courant gazeux du réacteur de queue au réacteur de tête dans la série.

11. Procédé pour traiter un catalyseur comprenant au moins un métal du Groupe VIII et présent dans une pluralité de réacteurs, comprenant la mise en contact du catalyseur avec un gaz comprenant un halogène, de l'oxygène et un gaz inerte de manière à redisperser ledit métal, dans lequel ladite mise en contact comprend le déclenchement de l'écoulement d'un halogène dans chacun desdits réacteurs tout d'abord dans le réacteur nécessitant le plus long temps d'oxychloration, et l'ajustement du débit d'halogène à travers lesdits réacteurs de telle sorte que les sorties de l'halogène hors des réacteurs soient pratiquement simultanées, et la réduction du métal dans les réacteurs s'effectuant à raison d'un réacteur à la fois depuis le réacteur de queue jusqu'au réacteur de tête.

12. Procédé répondant à la définition suivant la revendication 11, comprenant un ajustement du débit de l'halogène à travers chacun des réacteurs de telle sorte qu'il en résulte des sorties pratiquement simultanées de l'halogène de tous lesdits réacteurs conformément à l'équation suivante :

$$T = (P/V)K$$

dans laquelle W représente le Poids du catalyseur dans chacun desdits réacteurs, R représente la vitesse pondérale du courant d'halogène, T représente le temps d'oxychloration et K représente une constante qui est caractéristique du catalyseur et des unités choisies pour exprimer le poids et le temps.

13. Procédé répondant à la définition suivant la revendication 11 ou la revendication 12, dans lequel le déclenchement comprend l'introduction d'un courant d'halogène tout d'abord dans le réacteur contenant le poids le plus élevé du catalyseur et en dernier dans le réacteur contenant le poids le plus faible dudit catalyseur.

14. Procédé suivant l'une quelconque des revendications 11 à 13 pour le traitement d'un catalyseur à base d'une zéolite comprenant au moins un métal du Groupe VIII présent dans une pluralité de réacteurs comprenant un réacteur de queue et un réacteur de tête, dans lequel la réduction du métal présent dans les réacteurs à raison d'un réacteur à la fois est effectuée en mettant en contact le catalyseur présent dans un desdits réacteurs et comprenant un métal du Groupe VIII à l'état non réduit avec un courant gazeux contenant un agent réducteur pour provoquer une réduction pratiquement totale dudit métal du Groupe VIII ; et
en maintenant le catalyseur comprenant ledit métal à un état non réduit présent dans lesdits autres réacteurs dans une atmosphère pratiquement dépourvue d'halogène ou dépourvue d'eau.

15. Procédé répondant à la définition suivant la revendication 14, comprenant en outre les étapes consistant :
à introduire ensuite un courant gazeux contenant un agent réducteur dans un autre desdits réacteurs contenant un métal catalytique à un état non réduit, et à mettre en contact ledit métal catalytique pour le réduire pratiquement totalement, tout en maintenant le catalyseur comprenant ledit métal catalytique dans une atmosphère pratiquement dépourvue d'halogène ou dépourvue d'eau, jusqu'à ce que le catalyseur comprenant ledit métal catalytique dans chacun desdits réacteurs soit réduit pratiquement totalement, ledit métal catalytique étant seulement exposé à un halogène après sa réduction.

16. Procédé répondant à la définition suivant l'une quelconque des revendications 11 à 15, comprenant le déchargement d'un courant gazeux du réacteur de queue, comprenant du HCl et de l'eau, et l'introduction d'un courant gazeux pratiquement dépourvu de HCl et d'eau dans le réacteur de tête.

17. Procédé répondant à la définition suivant la revendication 16, comprenant l'élimination de HCl et de $H_2O$ du courant gazeux déchargé avant la réintroduction du courant gazeux pratiquement dépourvu de HCl et d'eau dans le réacteur de tête.

18. Procédé répondant à la définition suivant l'une quelconque des revendications 11 à 15, comprenant en outre la mise en contact du catalyseur désactivé présent dans les réacteurs avec de l'oxygène et un halogène afin de redisperser le métal et de parvenir à des sorties pratiquement simultanées de l'halogène de tous lesdits réacteurs.

19. Procédé suivant l'une quelconque des revendications 11 à 18, dans lequel le catalyseur comprend une zéolite et au moins un métal du Groupe VIII.

20. Procédé suivant la revendication 19, dans lequel la zéolite est une zéolite à grands pores, au moins 30 % de cette zéolite consistant en zéolite L.

21. Procédé suivant la revendication 19, dans lequel la zéolite à grands pores comprend des cations échangeables.

22. Procédé suivant la revendication 18 ou 19, dans lequel les cations échangeables dans la zéolite sont des cations potassium ou baryum.

**23.** Procédé suivant l'une quelconque des revendications 11 à 22, dans lequel le métal consistant en au moins un métal du Groupe VIII est le platine.